# EUROPEAN PATENT SPECIFICATION

(11) **EP 4 011 889 B1**
(45) Date of publication and mention of the grant of the patent: **03.09.2025**
(21) Application number: 20851685.6
(22) Date of filing: 27.07.2020
(51) Int. Cl.: C07F 7/08

(54) **PRIMARY AMINOSILOXANE COMPOUND AND METHOD FOR PRODUCING SAME**
PRIMÄRE AMINOSILOXANVERBINDUNG UND VERFAHREN ZU IHRER HERSTELLUNG
COMPOSÉ D'AMINOSILOXANE PRIMAIRE ET SON PROCÉDÉ DE PRODUCTION

(30) Priority: 09.08.2019 JP 2019147267
(43) Date of publication of application: 15.06.2022
(73) Proprietor: Shin-Etsu Chemical Co., Ltd., Tokyo 100-0005 (JP)
(72) Inventor: NODA Daisuke, Annaka-shi, Gunma 379-0224 (JP)
(74) Representative: Mewburn Ellis LLP
(86) International application number: PCT/JP2020/028695
(87) International publication number: WO 2021/029210

(56) References cited:
- CN-A- 110 922 600
- JP-A- 2000 061 973
- JP-A- 2007 023 246
- JP-A- 2018 528 156
- JP-A- H06 228 315
- US-A- 3 981 859

## Description

### TECHNICAL FIELD

This invention relates to a method for preparing a novel primary aminosiloxane compound, and more particularly, to a method for preparing a novel primary aminomethylsiloxane compound.

### BACKGROUND ART

Silane compounds and modified siloxane compounds having a primary amino group find a wide variety of use wherein the adsorption and reactivity of the amino group are utilized, including filler surface modifying agents, resin modifying agents, textile treating agents, paint additives, and cosmetic raw materials, as well as synthesis reactants for high-functionality products.

Of the silane compounds and modified siloxane compounds having a primary amino group, those compounds in which the linker between a silicon atom and the primary amino group has a carbon chain length of at least 3 carbon atoms are generally well known, whereas few reports refer to modified siloxane compounds having a carbon chain of one carbon atom, i.e., a primary aminomethyl group.

Patent Document 1 (JP-A 2005-517749) describes a primary aminomethyl-functionality polysiloxane and a method for preparing the same. It is reported that a both end primary aminomethyl-modified polysiloxane is synthesized by reacting a polysiloxane having a hydroxy group at a molecular chain end with an alkoxysilane having a primary aminomethyl group.

Patent Document 2 (JP-A 2007-503455) describes a siloxane compound having a primary aminomethyl group as an organofunctionality siloxane mixture and a method for preparing the same. Since examples relating to such compounds are described nowhere, it is unknown whether the compound can be prepared by the proposed method.

Patent Document 3 (US 20060122413A1) describes examples relating to pendant primary aminomethyl-modified polysiloxane compounds and branched primary aminomethyl-modified polysiloxane compounds in which among siloxane structural units, D units (R₂SiO_{2/2}) and T units (RSiO_{3/2}) are modified. Herein, the desired compound is obtained by using an alkoxysilane having a primary aminomethyl group as the reactant and reacting it with a polysiloxane compound having a hydroxy group at a molecular chain end.

In Patent Documents 1 to 3, for the synthesis of siloxane compounds having a primary aminomethyl group, alkoxysilanes having a primary aminomethyl group are used as the reactant.

Patent Document 4 (JP-A 2018-528156) describes disiloxane compounds having a primary aminomethyl group and their synthesis. Synthesis is carried out herein by reacting a disiloxane having a chloromethyl group with sodium azide to form an azide product, followed by hydrogenation.

Patent Document 5 discloses 2-tris(trimethylsiloxy)silylethylamine, 3-tris(trimethylsiloxy)silylpropylamine and 4-tris(trimethylsiloxy)silylbutylamine, which are prepared by the reaction of bis(trimethylsilyl)oxides with trialkoxysilylalkylamines in the presence of an alkaline catalyst.

Non-Patent Document 1 (Journal of the American Chemical Society, 1955, 77, 3493) describes disiloxane compounds and cyclic siloxane compounds having a primary aminomethyl group and their synthesis.

With regard to the synthesis of siloxane compounds having a primary aminomethyl group, it is possible to obtain the desired compounds by reacting alkoxysilanes having a primary aminomethyl group with polysiloxane compounds having a hydroxy group at a molecular chain end, as in Patent Documents 1 to 3.

On the other hand, when low molecular siloxane compounds having a hydroxy group at a molecular chain end are used, it is readily presumed that condensation reaction between hydroxy end groups is accelerated, and H₂O is by-produced at the same time as hydroxy groups disappear.

Further, alkoxysilanes having a substituent at α-position are characterized by accelerated hydrolysis reaction. Since alkoxysilanes having a primary aminomethyl group instantly undergo hydrolysis reaction with by-produced H₂O, it is difficult to obtain primary aminomethylsiloxane compounds having branched chain, for example, M₃T: (R₃SiO_{1/2})₃(RSiO_{3/2}) from trialkoxysilanes having a primary aminomethyl group and low molecular siloxane compounds having a hydroxy group at a molecular chain end. No exemplary compounds have been reported.

### PRIOR ART DOCUMENTS

### PATENT DOCUMENTS

Patent Document 1: JP-A 2005-517749
Patent Document 2: JP-A 2007-503455
Patent Document 3: US 2006-0122413A1
Patent Document 4: JP-A 2018-528156
Patent Document 5: US 3981859 A1

### NON-PATENT DOCUMENTS

Non-Patent Document 1: Journal of the American Chemical Society, 1955, 77, 3493

### SUMMARY OF INVENTION

### TECHNICAL PROBLEM

An object of the invention, which has been made under the above-mentioned circumstances, is to provide a method for preparing a novel primary aminosiloxane compound and more particularly, a method for preparing a novel primary aminomethylsiloxane compound.

### SOLUTION TO PROBLEM

Making extensive investigations to attain the above object, the inventor has found that a novel primary aminosiloxane compound is obtained by subjecting a siloxane compound having an imide skeleton to deprotection reaction known as Gabriel synthesis. The invention is predicated on this finding.

Accordingly, the invention provides a method for preparing a novel primary aminosiloxane compound, as defined in the claims.

### ADVANTAGEOUS EFFECTS OF INVENTION

According to the invention, there is provided a method for preparing novel primary aminosiloxane compounds and more particularly, a method for preparing novel primary aminomethylsiloxane compounds. These novel primary aminosiloxane compounds are highly useful in that they find a wide variety of use wherein the adsorption and reactivity of the amino group are utilized, including filler surface modifying agents, resin modifying agents, textile treating agents, paint additives, and cosmetic raw materials, as well as synthesis reactants for high-functionality products, for example, reactants for ligands in hydrosilylation reaction.

### BRIEF DESCRIPTION OF DRAWINGS

[FIG. 1] FIG. 1 is a diagram showing the data of ¹H-NMR analysis on the compound obtained in Synthesis Example 2.
[FIG. 2] FIG. 2 is a diagram showing the data of ¹H-NMR analysis on the aminomethylsiloxane compound obtained in Example 1.

### DESCRIPTION OF EMBODIMENTS

Now the invention is described in detail.

### <Primary aminosiloxane compound>

The present disclosure provides a primary aminosiloxane compound having the formula (1), which is not part of the invention.

H₂N-CR¹R²-Si(OSiR³R⁴R⁵)₃ (1)

In the formula (1), R¹, R², R³, R⁴ and R⁵ are each independently hydrogen or a C₁-C₃₀ monovalent hydrocarbon group in which some or all carbon-bonded hydrogen atoms may be substituted by halogen atoms or hydroxy groups and which may be separated by oxygen or nitrogen.

Suitable halogen atoms include fluorine, chlorine, bromine and iodine.

The C₁-C₃₀ monovalent hydrocarbon groups include straight, branched or cyclic alkyl, alkenyl, alkynyl, aryl and aralkyl groups.

The alkyl groups are preferably of 1 to 20 carbon atoms, more preferably of 1 to 10 carbon atoms, and examples thereof include straight or branched alkyl groups such as methyl, ethyl, n-propyl, isopropyl, n-butyl, isobutyl, s-butyl, t-butyl, n-pentyl, n-hexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, and n-eicosanyl; and cyclic alkyl groups such as cyclopropyl, cyclobutyl, cyclopentyl, cyclohexyl, cycloheptyl, cyclooctyl, cyclononyl, norbornyl, and adamantyl.

The alkenyl groups are preferably of 2 to 20 carbon atoms, and examples thereof include ethenyl (or vinyl), n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl, n-1-pentenyl, n-1-decenyl, and n-1-eicosenyl.

The alkynyl groups are preferably of 2 to 20 carbon atoms, and examples thereof include ethynyl, n-1-propynyl, n-2-propynyl, n-1-butynyl, n-2-butynyl, n-3-butynyl, 1-methyl-2-propynyl, n-1-pentynyl, n-2-pentynyl, n-3-pentynyl, n-4-pentynyl, 1-methyl-n-butynyl, 2-methyl-n-butynyl, 3-methyl-n-butynyl, 1,1-dimethyl-n-propynyl, n-1-hexynyl, n-1-decynyl, n-1-pentadecynyl, and n-1-eicosynyl.

The aryl groups are preferably of 6 to 30 carbon atoms, more preferably of 6 to 20 carbon atoms, and examples thereof include phenyl, 1-naphthyl, 2-naphthyl, anthryl, phenanthryl, o-biphenylyl, m-biphenylyl, and p-biphenylyl.

The aralkyl groups are preferably of 7 to 30 carbon atoms, more preferably of 7 to 20 carbon atoms, and examples thereof include benzyl, phenylethyl, phenylpropyl, naphthylmethyl, naphthylethyl, and naphthylpropyl.

The hydrocarbon group may have a substituent(s) and may have a plurality of identical or different substituents at an arbitrary position or positions.

Exemplary substituents include halogen atoms such as fluorine and chlorine as mentioned above, and hydroxy.

Also, one or more atoms selected from oxygen and nitrogen may intervene in each group R¹, R², R³, R⁴ and R⁵ as long as synthesis is possible.

In the formula (1), R¹ and R² are more preferably hydrogen. When both R¹ and R² are hydrogen, the compound having formula (1) is a primary aminomethylsiloxane compound.

In the formula (1), R³, R⁴ and R⁵ are more preferably selected from hydrogen, methyl, ethyl, n-propyl, isopropyl, butyl, n-octyl, n-decyl, n-dodecyl, phenyl, 2-isopropylphenyl, vinyl, hydroxyethyloxypropyl, and trifluoromethylethyl. Methyl is most preferred.

Examples of the primary aminosiloxane compound having the formula (1) are shown below.

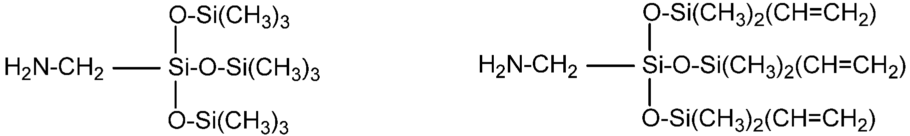

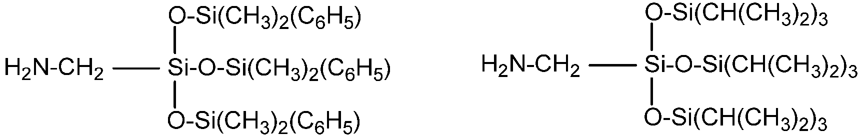

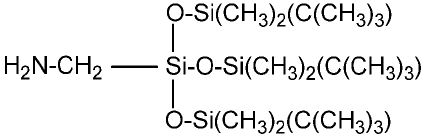

### <Method for preparing primary aminosiloxane compound>

The method for preparing the primary aminosiloxane compound having the formula (1) involves the step of reacting a siloxane compound having the following formula (2) as a precursor with a deprotecting agent.

R⁶-C(=O)-NR⁷-CR¹R²-Si(OSiR³R⁴R⁵)₃ (2)

In the formula (2), R¹, R², R³, R⁴ and R⁵ are as defined above.

Of the groups R¹, R², R³, R⁴ and R⁵, more preferably R¹ and R² are hydrogen, and R³, R⁴ and R⁵ are selected from hydrogen, methyl, ethyl, n-propyl, isopropyl, butyl, n-octyl, n-decyl, n-dodecyl, phenyl, 2-isopropylphenyl, vinyl, hydroxyethyloxypropyl, and trifluoromethylethyl.

R⁷ is hydrogen or -C(=O)-R⁸, and R⁶ and R⁸ each are a C₁-C₃₀ monovalent hydrocarbon group, with the proviso that when R⁷ is -C(=O)-R⁸, R⁶ may bond with R⁸ to form a divalent hydrocarbon group to construct a cyclic structure.

In the formula (2), examples of the C₁-C₃₀ monovalent hydrocarbon groups R⁶ and R⁸ are as exemplified above for R¹ to R⁵.

In the formula (2), R⁷ is preferably -C(=O)-R⁸. Preference is given to a compound having the formula (2) wherein R⁷ is -C(=O)-R⁸, and R⁶ bonds with R⁸ to form a divalent hydrocarbon group to construct a cyclic structure, that is, a cyclic imidosiloxane compound having the following formula (3):

R⁹N-CR¹R²-Si(OSiR³R⁴R⁵)₃ (3)

wherein R¹, R², R³, R⁴ and R⁵ are as defined above, R⁹ is a divalent group: -C(=O)-X-C(=O)-, and X is a C₁-C₃₀ divalent hydrocarbon group.

In the formula (3), X is selected from C₁-C₃₀ divalent hydrocarbon groups, for example, unsubstituted or substituted alkylene, alkenylene, arylene, and aralkylene groups.

The alkylene groups may be straight, branched or cyclic and are preferably of 1 to 20 carbon atoms, more preferably of 2 to 10 carbon atoms. Examples thereof include straight or branched alkylene groups such as methylene, ethylene, propylene, trimethylene, n-butylene, isobutylene, s-butylene, n-octylene, 2-ethylhexylene, n-decylene, n-undecylene, n-dodecylene, n-tridecylene, n-tetradecylene, n-pentadecylene, n-hexadecylene, n-heptadecylene, n-octadecylene, n-nonadecylene, and n-eicosanylene; and cyclic alkylene groups such as 1,4-cyclohexylene.

The alkenylene groups may be straight, branched or cyclic and are preferably of 2 to 20 carbon atoms, more preferably of 2 to 10 carbon atoms. Examples thereof include straight or branched alkenylene groups such as ethenylene, propenylene, and butenylene.

The arylene groups are preferably of 6 to 30 carbon atoms, more preferably of 6 to 20 carbon atoms. Examples thereof include o-phenylene, m-phenylene, p-phenylene, 1,2-naphthylene, 1,8-naphthylene, 2,3-naphthylene, and 4,4'-biphenylene.

The aralkylene groups are preferably of 7 to 30 carbon atoms, more preferably of 7 to 20 carbon atoms. Examples thereof include -(CH₂)ₖ-Ar- wherein Ar is a C₆-C₂₀ arylene group and k is an integer of 1 to 10, -Ar-(CH₂)ₖ- wherein Ar and k are as defined above, and -(CH₂)ₖ-Ar-(CH₂)ₖ- wherein Ar is as defined above and k is each independently as defined above.

Of these groups, ethylene, ethenylene, and o-phenylene are preferred.

In the hydrocarbon group X, any carbon-bonded hydrogen may be substituted, and exemplary substituents include halogen atoms such as fluorine, chlorine, bromine and iodine, and alkoxy groups such as methoxy, ethoxy and propoxy. Preferably X is unsubstituted.

Examples of the siloxane compound having the formula (2), preferably the formula (3) are shown below.

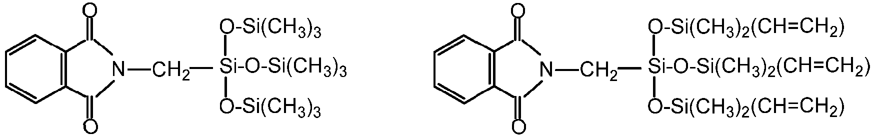

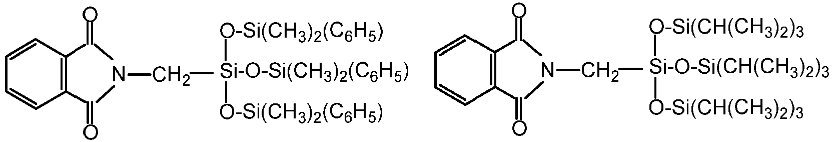

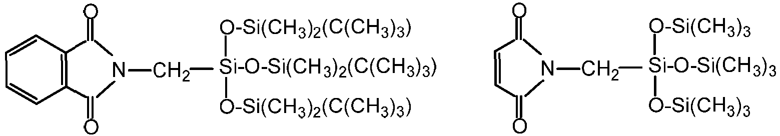

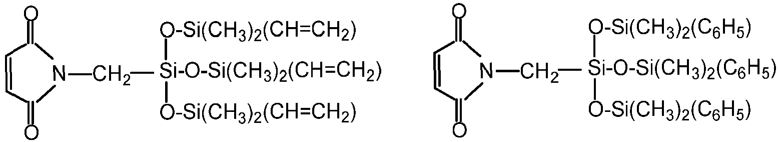

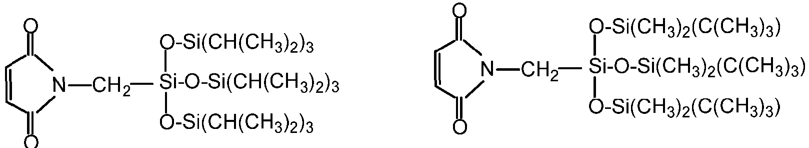

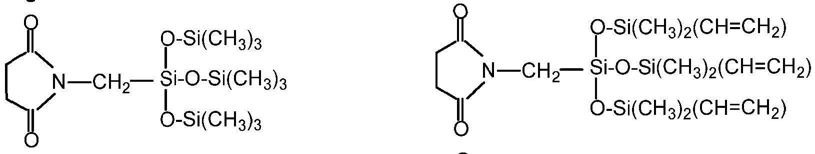

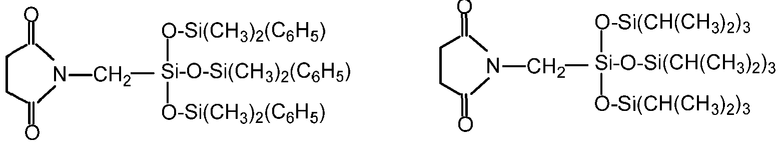

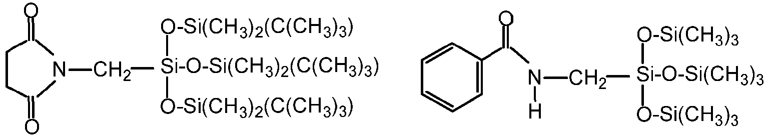

### Synthesis of siloxane compound having the formula (2)

While the primary aminosiloxane compound having the formula (1) is obtained by deprotecting the siloxane compound having the formula (2), preferably the formula (3) as precursor, the method for preparing the siloxane compound having the formula (2), preferably the formula (3) as precursor is, for example, by reacting a siloxane compound having a chloromethyl group with an alkali metal salt of an amide compound or imide compound.

The siloxane compound having a chloromethyl group can be prepared by reacting a chloromethyltrialkoxysilane, chloromethyldialkoxymethylsilane or chloromethylalkoxydimethylsilane with a disiloxane compound such as 1,1,1,3,3,3-hexamethyldisiloxane or 1,1,3,3-tetramethyldisiloxane in the presence of an acid catalyst.

When the siloxane compound having a chloromethyl group has a Si-H group, a substituent may be introduced by hydrosilylation reaction with the aid of a platinum catalyst (e.g., Karstedt catalyst or Speier catalyst) or Rh catalyst.

The alkali metal salt of an amide compound or imide compound is obtained by reacting an amide compound such as acetamide or an imide compound such as succinimide, maleimide or phthalimide with an alkali metal alkoxide such as sodium methoxide, sodium t-butoxide or potassium t-butoxide. Besides, potassium phthalimide is commercially available.

In preparing the siloxane compound having the formula (2), the alkali metal salt of an amide compound or imide compound is used in an amount of 0.1 to 50 moles, preferably 1 to 20 moles per mole of chloromethyl group on the siloxane compound having a chloromethyl group. In order to accelerate the reaction, for example, a catalytic amount of alkali metal iodide such as sodium iodide may be added.

In preparing the siloxane compound having the formula (2), an organic solvent may be used. For example, ether compounds such as ethylene glycol dimethyl ether, diethylene glycol dimethyl ether and tetrahydrofuran, and amide compounds such as N,N-dimethylformamide, N,N-dimethylacetamide and N-methylpyrrolidone are used.

The reaction conditions under which the siloxane compound having the formula (2) is prepared are not particularly limited and typically include a reaction temperature of room temperature (20±5°C) to 200°C, preferably 50 to 150°C and a reaction time of 0.5 to 48 hours.

At the end of reaction, the reaction product is subjected to filtration or separatory washing with distilled water or neutral aqueous solution of a salt such as NaCl or Na₂SO₄, and the organic layer is dried over Na₂SO₄. These treatments are followed by vacuum drying, yielding the siloxane compound having the formula (2). It is noted that the reaction product may be diluted with a solvent such as hexane prior to the filtration or separatory washing.

### Deprotection of siloxane compound having the formula (2)

Further, a deprotecting agent is added to the siloxane compound having the formula (2), preferably the formula (3) as precursor to induce deprotection to produce the primary aminosiloxane compound having the formula (1).

The deprotecting agent used for deprotection of the siloxane compound having the formula (2) may be one capable of converting the amide skeleton (e.g., R⁶-C(=O)-N) or imide skeleton (e.g., R⁶-C(=O)-N-C(=O)-R⁸) to an amino group. It is selected from, for example, the compounds described in Greene's Protective Groups in Organic Synthesis, 5th Ed., 1012-1014, 2014, John Wiley & Sons, Inc., preferably hydrazine monohydrates and primary amine compounds, more preferably primary amine compounds.

The primary amine compounds are not particularly limited as long as the reaction takes place. Compounds having an amino group and containing a C₁-C₃₀ straight, branched or cyclic hydrocarbon group are preferred, with primary alkylamine compounds being more preferred.

The primary alkylamine compounds are not particularly limited as long as the reaction takes place. Examples include alkylamines such as methylamine, n-butylamine, hexylamine, and octylamine, as well as ethylenediamine, propylenediamine, diethylenetriamine, triethylenetetramine, and tetraethylenehexamine.

The amount of the deprotecting agent used may be about 1 to about 100 moles, preferably 1 to 50 moles, more preferably 2 to 20 moles per mole of the compound having formula (2).

In preparing the primary aminosiloxane compound having the formula (1), an organic solvent may be added. Any organic solvent may be used as long as it does not interfere with the reaction. Use may be made of aliphatic hydrocarbons such as pentane, hexane, heptane, octane, and cyclohexane; ethers such as diethyl ether, diisopropyl ether, dibutyl ether, cyclopentyl methyl ether, tetrahydrofuran, and 1,4-dioxane; and aromatic hydrocarbons such as benzene, toluene, xylene, and mesitylene.

The reaction conditions under which the primary aminosiloxane compound having the formula (1) is prepared are not particularly limited and typically include a reaction temperature of 10 to 200°C, preferably 30 to 120°C and a reaction time of 1 to 48 hours.

The primary aminosiloxane compounds thus obtained, especially primary aminomethylsiloxane compounds are highly useful in that they find a wide variety of use where the adsorption and reactivity of the amino group are utilized, including filler surface modifying agents, resin modifying agents, textile treating agents, paint additives, and cosmetic raw materials, as well as synthesis reactants for high-functionality products, for example, reactants for ligands in hydrosilylation reaction.

### EXAMPLES

Synthesis Examples and Examples are given below for illustrating the invention. In Synthesis Examples and Examples, reactions and storage of products are conducted in nitrogen atmosphere unless otherwise stated.

For ¹H-NMR analysis, Advance III 400 (Bruker Analytik) was used. GC yield was measured by system 7890B (column HP-5, Agilent Technologies) at a rate of 10°C/min from 80°C.

### [Synthesis Example 1]

### Synthesis of 3-(chloromethyl)-1,1,1,5,5,5-hexamethyl-3-[(trimethylsilyl)oxy]trisiloxane

A 500-mL separable flask was charged with 216.1 g (1.27 mol) of chloromethyltrimethoxysilane, 80.1 g of methanol, 405.2 g (2.50 mol) of 1,1,1,3,3,3-hexamethyldisiloxane, and 12.7 g of sulfuric acid, and ice cooled. With the flask kept below 15°C, 88.7 g of distilled water was added dropwise over 30 minutes. At the end of addition, stirring was continued at room temperature for 7 hours. The organic layer was recovered by separatory operation and washed with sodium chloride aqueous solution until the water layer became neutral. Thereafter, the organic layer was purified by distillation, yielding 1135.32 g of colorless clear solution (yield 31%, GC purity > 99%). The resulting compound is shown below.

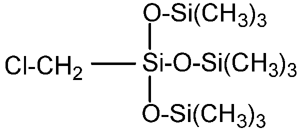

### [Synthesis Example 2]

### Synthesis of 3-(N-phthalimidomethyl)-1,1,1, 5,5, 5-hexamethyl-3-[(trimethylsilyl)oxy]-trisiloxane

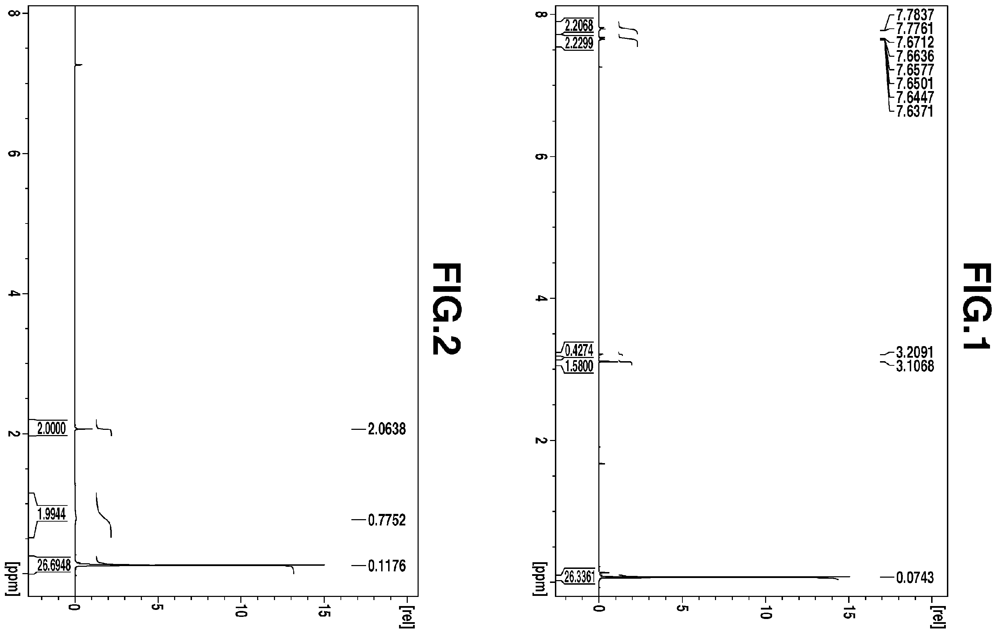

A 500-mL separable flask was charged with 79.46 g (0.43 mol) of potassium phthalimide (Tokyo Chemical Industry Co., Ltd.), 7.24 g (0.05 mol) of sodium iodide (Fujifilm Wako Pure Chemical Corp.), and 130.54 g (0.38 mol) of 3-(chloromethyl)-1,1,1,5,5,5-hexamethyl-3-[(trimethylsilyl)oxy]trisiloxane obtained in Synthesis Example 1. The flask was equipped with a stirring impeller and condenser, and 89.3 g of dry N,N-dimethylformamide (Fujifilm Wako Pure Chemical Corp.) was added thereto, after which reaction was carried out in an oil bath at 150°C for 10 hours. Thereafter, 99.8 g of hexane was added to the reaction solution. The subsequent filtration and vacuum drying yielded 158.81 g of a pale yellow solution (yield 89%, GC purity 99%). FIG. 1 shows the data of ¹H-NMR analysis of the resulting compound. The compound is shown below.
¹H-NMR (CDCl₃, 400 MHz) δ: 7.88-7.74 (m, 2H), 7.70-7.62 (m, 2H), 3.21 (s, 0.43H), 3.11 (s, 1.57H), 0.07 (s, 27H)

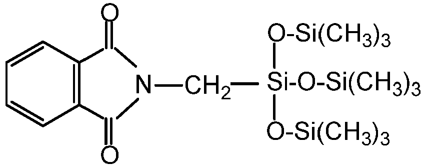

### [Example 1]

### Preparation of 3-(aminomethyl)-1, 1, 1,5,5,5-hexamethyl-3-[(trimethylsilyl)oxy]trisiloxane

A 500-mL separable flask was charged with 100.03 g (0.22 mol) of the compound obtained in Synthesis Example 2 and 50.74 g (0.84 mol) of dry ethylenediamine (Fujifilm Wako Pure Chemical Corp.). The flask was equipped with a stirring impeller and condenser, after which reaction was carried out in an oil bath at 70°C for 3 hours. The reaction solution separated into two layers, after which the upper layer was recovered and extracted 3 times with hexane. On vacuum distillation (266.6 Pa / 2 mmHg, 77°C), 46.47 g of a colorless solution was obtained (yield 65%, GC purity > 99%). FIG. 2 shows the data of ¹H-NMR analysis of the resulting compound. The compound is shown below.
¹H-NMR (CDCl₃, 400 MHz) δ: 2.02 (s, 2H), 1.00-0.60 (br, 2H), 0.12 (s, 27H)

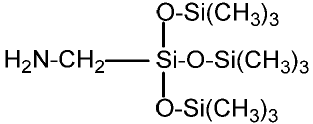

## Claims

1. A method for preparing a primary aminosiloxane compound having the formula (1), comprising the step of reacting a siloxane compound with a deprotecting agent to produce the primary aminosiloxane compound having the formula (1), said siloxane compound having the formula (2):
H₂N-CR¹R²-Si(OSiR³R⁴R⁵)₃ (1)
R⁶-C(=O)-NR⁷-CR¹R²-Si(O SiR³R⁴R⁵)₃ (2)
wherein R¹, R², R³, R⁴ and R⁵ are each independently hydrogen or a C₁-C₃₀ monovalent hydrocarbon group in which some or all carbon-bonded hydrogen atoms may be substituted by halogen atoms or hydroxy groups and which may be separated by oxygen or nitrogen, R⁷ is hydrogen or -C(=O)-R⁸, R⁶ and R⁸ each are a C₁-C₃₀ monovalent hydrocarbon group, with the proviso that when R⁷ is -C(=O)-R⁸, R⁶ may bond with R⁸ to form a divalent hydrocarbon group to construct a cyclic structure.

2. The method for preparing the primary aminosiloxane compound according to claim 1 wherein in the formula (2), when R⁷ is -C(=O)-R⁸, R⁶ bonds with R⁸ to form a divalent hydrocarbon group to construct a cyclic structure.

3. The method for preparing the primary aminosiloxane compound according to claim 1 or 2 wherein the deprotecting agent to be reacted with the siloxane compound having the formula (2) is a hydrazine monohydrate or primary amine compound.

4. The method for preparing the primary aminosiloxane compound according to claim 3 wherein the primary amine compound is a primary alkylamine compound.

5. The method for preparing the primary aminosiloxane compound according to claim 4 wherein the primary alkylamine compound is selected from the group consisting of methylamine, n-butylamine, hexylamine, octylamine, ethylenediamine, propylenediamine, diethylenetriamine, triethylenetetramine, and tetraethylenehexamine.

6. The method for preparing the primary aminosiloxane compound according to any one of claims 1 to 5 wherein each of the C₁-C₃₀ monovalent hydrocarbon groups represented by R¹, R², R³, R⁴, R⁵, R⁶, and R⁸ is straight, branched or cyclic and selected from alkyl, alkenyl, alkynyl, aryl, and aralkyl groups.

## Patentansprüche

1. Verfahren zur Herstellung einer primären Aminosiloxan-Verbindung der Formel (1), das den Schritt des Umsetzens einer Siloxan-Verbindung mit einem Entschützungsmittel umfasst, um die primäre Aminosiloxan-Verbindung der Formel (1) herzustellen, wobei die Siloxan-Verbindung die Formel (2) aufweist:
H₂N-CR¹R²-Si(OSiR³R4R⁵)₃ , (1)
R⁶-C(=O)-NR-CR¹R²-Si(OSiR³R⁴R⁵)₃ (2)
worin R¹, R², R³, R⁴ und R⁵ jeweils unabhängig voneinander Wasserstoff oder eine einwertige C₁-C₃₀-Kohlenwasserstoffgruppe sind, worin gegebenenfalls manche oder alle Kohlenstoff-gebundenen Wasserstoffatome durch Halogenatome oder Hydroxygruppen ersetzt sind und die gegebenenfalls durch Sauerstoff oder Stickstoff getrennt sind, R⁷ Wasserstoff oder -(C=O)-R⁸ ist, R⁶ und R⁸ jeweils eine einwertige C₁-C₃₀-Kohlenwasserstoffgruppe sind, mit der Maßgabe, dass, wenn R⁷ -C(=O)-R⁸ ist, gegebenenfalls R⁶ mit R⁸ zu einer zweiwertigen Kohlenwasserstoffgruppe verbunden ist, um eine zyklischen Struktur zu konstruieren.

2. Verfahren zur Herstellung einer primären Aminosiloxan-Verbindung nach Anspruch 1, wobei in Formel (2), wenn R⁷ -C(=O)-R⁸ ist, R⁶ mit R⁸ zu einer zweiwertigen Kohlenwasserstoffgruppe verbunden ist, um eine zyklischen Struktur zu konstruieren.

3. Verfahren zur Herstellung einer primären Aminosiloxan-Verbindung nach Anspruch 1 oder 2, wobei das Entschützungsmittel, das mit der Siloxan-Verbindung der Formel (2) umgesetzt werden soll, ein Hydrazin-Monohydrat oder eine primäre Amin-Verbindung ist.

4. Verfahren zur Herstellung einer primären Aminosiloxan-Verbindung nach Anspruch 3, wobei die primäre Amin-Verbindung eine primäre Alkylamin-Verbindung ist.

5. Verfahren zur Herstellung einer primären Aminosiloxan-Verbindung nach Anspruch 4, wobei die primäre Alkylamin-Verbindung aus der aus Methylamin, n-Butylamin, Hexylamin, Octylamin, Ethylendiamin, Propylendiamin, Diethylentriamin, Triethylentetramin und Tetraethylenhexamin bestehenden Gruppe ausgewählt ist.

6. Verfahren zur Herstellung einer primären Aminosiloxan-Verbindung nach einem der Ansprüche 1 bis 5, wobei jede der einwertigen C₁-C₃₀-Kohlenwasserstoffgruppen, die durch R¹, R², R³, R⁴, R⁵, R⁶ und R⁸ dargestellt sind, unverzweigt, verzweigt oder zyklisch ist und aus Alkyl-, Alkenyl-, Alkinyl-, Aryl- und Aralkylgruppen ausgewählt ist.

## Revendications

1. Procédé de préparation d'un composé d'aminosiloxane primaire présentant la formule (1), comprenant l'étape consistant à faire réagir un composé de siloxane avec un agent de déprotection afin de produire le composé d'aminosiloxane primaire présentant la formule (1), ledit composé de siloxane présentant la formule (2) :
H₂N-CR¹R²-Si (OSiR³R⁴R⁵)₃ (1)
R⁶-C(=O)-NR⁷-CR¹R²-Si(OSiR³R⁴R⁵)₃ (2
) dans lequel R¹, R², R³, R⁴ et R⁵ sont chacun indépendamment de l'hydrogène ou un groupe hydrocarboné monovalent en C₁-C₃₀ dans lequel certains ou tous les atomes d'hydrogène liés au carbone peuvent être substitués par des atomes d'halogène ou des groupes hydroxy et qui peuvent être séparés par de l'oxygène ou de l'azote, R⁷ est de l'hydrogène ou -C(=O)-R⁸, R⁶ et R⁸ sont chacun un groupe hydrocarboné monovalent en C₁-C₃₀, à condition que lorsque R⁷ est -C(=O)-R⁸, R⁶ puisse se lier à R⁸ pour former un groupe hydrocarboné divalent afin de construire une structure cyclique.

2. Procédé de préparation du composé d'aminosiloxane primaire selon la revendication 1, dans lequel dans la formule (2), lorsque R⁷ est -C(=O)-R⁸, R⁶ se lie à R⁸ pour former un groupe hydrocarboné divalent afin de construire une structure cyclique.

3. Procédé de préparation du composé d'aminosiloxane primaire selon la revendication 1 ou 2, dans lequel l'agent de déprotection devant être mis en réaction avec le composé de siloxane présentant la formule (2) est un monohydrate d'hydrazine ou un composé d'amine primaire.

4. Procédé de préparation du composé d'aminosiloxane primaire selon la revendication 3, dans lequel le composé d'amine primaire est un composé d'alkylamine primaire.

5. Procédé de préparation du composé aminosiloxane primaire selon la revendication 4, dans lequel le composé d'alkylamine primaire est choisi dans le groupe comprenant méthylamine, n-butylamine, hexylamine, octylamine, éthylènediamine, propylènediamine, diéthylènetriamine, triéthylènetétramine et tétraéthylènehexamine.

6. Procédé de préparation du composé d'aminosiloxane primaire selon l'une quelconque des revendications 1 à 5, dans lequel chacun des groupes hydrocarbonés monovalents en C₁-C₃₀ représentés par R¹, R², R³, R⁴, R⁵*,* R⁶ et R⁸ est linéaire, ramifié ou cyclique et choisi parmi des groupes alkyle, alcényle, alcynyle, aryle et aralkyle.
